# EUROPÄISCHE PATENTSCHRIFT

(11) **EP 0 882 660 B1**
(45) Veröffentlichungstag und Bekanntmachung des Hinweises auf die Patenterteilung: **10.01.2001**
(21) Anmeldenummer: 97108859.6
(22) Anmeldetag: 03.06.1997
(51) Int. Cl.: B65G 1/02, F16B 9/02, A47B 96/02

(54) **Regal für Lager- und Kommissionierzwecke**
Shelf for storage and order picking
Etagère de stockage et de préparation de commandes

(43) Veröffentlichungstag der Anmeldung: 09.12.1998
(73) Patentinhaber: NEDCON MAGAZIJNINRICHTING B.V., NL-7000 AA Doetinchem (NL)
(72) Erfinder: Hollander, Rudolf Richard, 7251 KC Vorden (NL)
(74) Vertreter: Stenger, Watzke & Ring Patentanwälte

(56) Entgegenhaltungen:
- EP-A- 0 273 345
- DE-A- 3 836 737
- DE-A- 4 121 682
- DE-U- 8 813 548
- DE-U- 9 010 342
- GB-A- 2 174 783
- US-A- 2 531 911
- US-A- 5 279 431

## Beschreibung

Die Erfindung betrifft ein Regal für Lager- und Kommissionierzwecke mit vertikalen Stützen und mit Traversen, welche die Stützen horizontal verbinden und die vordere und hintere Abstützung von quer zu den Traversen angeordneten und jeweils aus einem Profil bestehenden Warenauflagen übernehmen, wodurch die Warenauflagen in Richtung der Tiefe des Regals sich erstreckende Flächen für die darauf liegenden Waren bilden, und ferner mit Mitteln zur Fixierung der Warenauflagen in Traversenlängsrichtung, wobei die Mittel zur Fixierung der Warenauflagen in Traversenlängsrichtung Aussparungen an den Traversen und in die Aussparungen eingreifende Halteelemente an den Warenauflagen sind.

Derartige Regale finden in erster Linie bei Großregallagern mit automatischer, rechnergesteuerter Ein- und Auslagerung von Stückgütern Verwendung. Bei den Stückgütern kann es sich z. B. um genormte Behälter oder Paletten handeln. Das Regal ist in eine Vielzahl übereinander und nebeneinander angeordneter Fächer unterteilt, die sich in der Tiefe so weit erstrecken können, daß in jedem einzelnen Fach mehrere Stückgüter hintereinander gelagert werden können. Beim Ein- und Auslagern ist es erforderlich, die Stückgüter entlang des Faches zu verschieben, wozu eine in Richtung der Tiefe des Regals sich erstreckende Fläche als Auflagefläche für die Stückgüter erforderlich ist. Diese Fläche muß zumindest die Längskanten des Stückgutes untergreifen und sollte das Stückgut während des Verschiebens ferner seitlich führen, um ein Verkanten des Stückgutes innerhalb des Faches zu vermeiden.

Ein bekanntes Regal für Lager- und Kommissionierzwecke mit den eingangs genannten Merkmalen setzt sich aus einem System vertikaler Stützen zusammen, an denen entsprechend den einzelnen Fachhöhen horizontale Traversen in Gestalt von Querträgern befestigt sind. Die Traversen erstrecken sich entlang der Vorder- und Rückseite des Regals und dienen - neben einer Verstrebung der vertikalen Stützen - dazu, Profile abzustützen, die sich rechtwinklig zu den Traversen durch die Tiefe des Regals hindurch erstrecken. Die Profile dienen als Warenauflage und sind jeweils mit mindestens einer Auflagefläche für die vertikale Abstützung des Stückgutes sowie zusätzlich mit einer Führungsfläche für dessen seitliche Führung versehen. Die Warenauflagen sind nach Art langgestreckter Winkelprofile geformt, und sind jeder Reihe von Stückgütern jeweils paarweise zugeordnet, d. h. die aufliegenden Stückgüter stützen sich mit ihrer einen Längskante auf der einen Warenauflage, und mit der anderen Längskante auf der anderen Warenauflage ab. Warenauflagen können aber auch so symmetrisch gestaltet sein, daß sie zugleich die eine Längskante einer Warenreihe sowie die benachbarte Längskante der benachbarten Warenreihe abstützen, wodurch sich die Anzahl der erforderlichen Profile auf die Hälfte reduziert.

Zur Fixierung der Warenauflagen werden diese an ihrem vorderen Ende mit der vorderen, an ihrem hinteren Ende mit der hinteren Traverse verschraubt oder vernietet. Diese Arbeiten sind, da sie für jede einzelne Warenauflage getrennt durchgeführt werden müssen, sehr zeitaufwendig und tragen mit dazu bei, daß die Montagekosten bei gattungsgemäßen Großregallagern bis zu 40 % des Anlagepreises betragen.

Ein montagefreundliches Regal ist aus der deutschen Gebrauchsmusterschrift 296 14 743 bekannt. Dieses Regal verwendet Fachböden, die bei der Montage des Regals lediglich in Aussparungen an der vorderen und hinteren Traverse eingelegt werden müssen. Jedoch fehlt hier eine seitliche Fixierung in Traversenlängsrichtung, weshalb die Fachböden geringfügig verrutschen können. Da zwischen zwei vertikalen Stützen zwischen sieben und zehn Fachböden angeordnet werden können, kann es selbst bei exakt auf Breite gefertigten Fachböden zu summierten Maßabweichungen in Traversenlängsrichtung in der Größenordnung von einem Zentimeter kommen, was bei modernen Regalsystemen zu Schwierigkeiten beim Beschicken und Entnehmen der Waren mittels der genau arbeitenden Fördereinrichtungen führen kann.

Zur Fixierung der Warenauflagen in Traversenlängsrichtung ist es aus der deutschen Gebrauchsmusterschrift 295 12 116 bekannt, Profile, welche die Warenauflagen bilden, mittelbar über zusätzliche Leisten an den Traversen zu befestigen. Die aus Kunststoff bestehenden Leisten sind längs der Traversen angeordnet und mit rechtwinklig zu den Traversen ausgerichteten Halteelementen versehen, die in die Enden der Profile hineinragen und diese in Traversenlängsrichtung fixieren. Nachteilig bei dieser Lösung ist das Erfordernis zusätzlicher Befestigungs- bzw. Fixierungselemente in Gestalt der in die Traveren einsetzbaren Leisten aus Kunststoff. Der Montageaufwand läßt sich mit dieser Lösung nicht nennenswert reduzieren.

Ein gattungsgemäßes Lagerregal, welches sämtliche Merkmale des Oberbegriffs des Anspruchs 1 offenbart, ist in der US 5,279,431 beschrieben. Bei diesem Regal sind auf den einander zugewandten Innenflächen der horizontal verlaufenden Traversen Aussparungen in Form von diagonalen Schlitzen vorgesehen. Zwischen die Traversen werden Warenauflageprofile eingesetzt, welche als U-Profile ausgebildet sind und an deren jeweils einem Schenkel beidseitig T-förmige Fortsätze angeformt sind. Zum Befestigen der Warenauflageprofile werden die T-förmigen Fortsätze in die schlitzförmigen Aussparungen an den Traversen eingeführt und das Warenauflageprofil wird zur Fixierung verdreht. Das Warenauflageprofil ruht schließlich auf an den einander gegenüberliegenden Traversen ausgeformten Absätzen und wird durch die in die Traversen eingeführten T-förmigen Vorsprünge in der Position gehalten. Das Einsetzen dieser Warenauflageprofile ist vergleichsweise kompliziert und bei einmal eingesetzten Profilen ergibt sich ein Absatz zwischen der Oberseite der Traverse und der durch die Warenauflageprofile gebildeten Warenauflagefläche.

Der Erfindung liegt die **Aufgabe** zugrunde, ein Regal für Lager- und Kommissionierzwecke zu schaffen, dessen Aufbau im Vergleich zu bekannten, gleich stark belastbaren Regalen einen verringerten Montageaufwand erfordert.

Zur **Lösung** wird bei einem Regal der eingangs genannten Art vorgeschlagen, daß die Halteelemente der Warenauflagen durch die Endbereiche nach unten gerichteter Abschnitte der Warenauflagen gebildet werden, wobei sich die nach unten gerichteten Abschnitte nur über einen Teil der Gesamtlänge der Warenauflagen erstrecken und jene Längsabschnitte der Warenauflagen, entlang derer die nach unten gerichteten Abschnitte fehlen, flächig auf der Oberseite der Traverse aufliegen.

Ein solcherart ausgebildetes Regal zeichnet sich dadurch aus, daß es im Vergleich zu bekannten, gleich stark belastbaren Regalen einen verringerten Montageaufwand erfordert. Die Fixierung in Traversenlängsrichtung erfolgt einerseits durch Aussparungen an den Traversen und andererseits durch von oben her in die Aussparungen eingreifende Halteelemente an den Warenauflagen selbst. Zusätzliche Befestigungsschritte, wie ein Verschrauben der Teile miteinander oder das Anbringen von Nieten, sind nicht erforderlich, so daß sich deutlich verringerte Montagezeiten ergeben. Insbesondere ist es möglich, die einzelnen Warenauflagen von einer Seite her in das Regal einzulegen und zu fixieren. Damit entfallen zusätzliche Montagegerüste an der anderen Seite des Regals sowie Sicherungsmaßnahmen für die Monteure, wenn diese zur Befestigung des hinteren Endes der Warenauflage in das Regal hineinsteigen müssen. Bei der Montage des erfindungsgemäßen Regals reicht es aus, eine verfahrbare Hubbühne vor dem Regal zu installieren, um dann den Monteuren zu ermöglichen, von der Vorderseite her sämtliche Warenauflagen in das Regal einzulegen und dort an den vorgesehenen Stellen zu fixieren.

Zur Erzielung einer besonders preisgünstig aus einem einzigen Profil herstellbaren Warenauflage werden die Halteelemente der Warenauflagen durch die Endbereiche nach unten gerichteter Abschnitte der Warenauflage gebildet. Die Halteelemente sind auf diese Weise einstückiger Bestandteil der Warenauflage.

Dadurch daß sich die nach unten gerichteten Abschnitte nur über einen Teil der Gesamtlänge der Warenauflage erstrecken, und daß jener Längsabschnitt der Warenauflage, entlang dessen der nach unten gerichtete Abschnitt fehlt, flächig auf der Oberseite der Traverse aufliegt, ergibt sich in Richtung der Tiefe des Regals eine glatte, durchgehende Fläche der Warenauflagen, so daß beim Einschieben und Herausziehen der Waren bzw. Stückgüter auf die einzelnen Warenauflagen bzw. von diesen weg die entsprechenden Flächen, auf denen die Waren aufliegen, über ihre gesamte Länge glatt und ohne Kanten und Absätze ausgebildet sind.

Mit einer Ausgestaltung wird vorgeschlagen, daß die Ausnehmungen als quer zur Traversenlängsrichtung angeordnete Schlitze gestaltet sind. Vorzugsweise sind die Schlitze zugleich nach oben und zur Seite in Richtung auf die Warenauflage hin offen. In diesem Fall können sich die Schlitze über Eck von der Oberseite der Traverse bis zu deren der Warenauflage zugewandten Seitenfläche erstrecken, wobei die Erstreckung jeweils geringer als die Breite der Oberseite bzw. die Höhe der Seitenfläche ist. Die Anordnung der Schlitze in den Traversen führt auf diese Weise zu keiner nennenswerten Schwächung der Festigkeit der Traversen.

Da die Warenauflagen weder verschraubt, noch vernietet mit den Traversen sind, kann es in Einzelfällen zu einem ungewollten Abheben der Warenauflagen kommen. Um dies zu vermeiden, wird mit einer Ausgestaltung der Erfindung vorgeschlagen, daß der zur Seite in Richtung auf die Warenauflage hin offene Bereich der Schlitze eine enge obere Schlitzöffnung und eine daran nach unten hin anschließende, erweiterte Schlitzöffnung aufweist, und daß die Halteelemente der Warenauflagen mit federnden Elementen versehen sind, die an der erweiterten Schlitzöffnung einrastbar sind. Dadurch sind die Warenauflagen in vertikaler Richtung gegen ein ungewolltes Herausnehmen geschützt, weil die federnden Elemente unterhalb der engen Schlitzöffnung wieder ausfedern können. Die einzelnen Warenauflagen lassen sich also an den Traversen einrasten und auf diese Weise verriegeln. Dies ist besonders an der bei der Montage abgewandten Seite des Regals von Vorteil. Der Monteur nimmt die Warenauflage und schiebt diese so weit in das Regal, bis das rückwärtige Ende der Warenauflage auf der hinteren Traverse aufliegt. Infolge der Schwerkraft oder durch leichten Druck auf die Warenauflage kann diese dann selbsttätig in der hinteren Traverse einrasten. Anschließend drückt der Monteur auch das vordere Ende der Warenauflage in die vordere Traverse, womit die Warenauflage insgesamt verriegelt ist.

Zwecks weiterer Vereinfachung der Warenauflage ist es vorteilhaft, wenn die nach unten gerichteten Abschnitt über eine Abwinklung von nahezu 180° in als federnde Elemente dienende Endabschnitte übergehen.

Um alle erforderlichen Einzelteile der Warenauflage an einem einzigen durchgehenden Profil realisieren zu können, können ferner die nach unten gerichteten Abschnitte zugleich die Längsränder der Warenauflage sein und auf diese Weise die Warenauflage in bezug auf Biegung und Torsion versteifen.

Schließlich wird vorgeschlagen, daß die Warenauflage an zumindest ihrer einen Stirnseite mit einstückig angeformten Einführschrägen versehen ist, um so das maschinelle Einführen der Waren zu erleichtern bzw. Verletzungen der Ware an scharfkantigen Graten zu vermeiden.

Weitere Einzelheiten und Vorteile der Erfindung werden nachfolgend anhand von Ausführungsbeispielen erläutert, die auf der Zeichnung dargestellt sind. Im einzelnen zeigen:
- Fig. 1: in einer Frontansicht nebeneinander und übereinander angeordnete Fächer eines Regals für Lager- oder Kommissionierzwecke mit darin angeordneten und auf profilförmigen Warenauflagen aufliegenden Behältern;
- Fig. 2: in einer perspektivischen, teilweise geschnittenen Darstellung die Verbindung zwischen horizontalen Traversen des Regals und einer auf diesen Traversen aufliegenden Warenauflage in Gestalt eines langgestreckten Profils;
- Fig. 3a: eine Schnittdarstellung durch Traverse und Warenauflage bei der Ausführungsform gemäß Fig. 2;
- Fig. 3b: eine Schnittdarstellung durch Traverse und Warenauflage bei einer gegenüber Fig. 3a geänderten Ausführungsform und
- Fig. 4: eine Schnittdarstellung entsprechend den Ebenen IV-IV der Figuren 3a und/oder 3b.

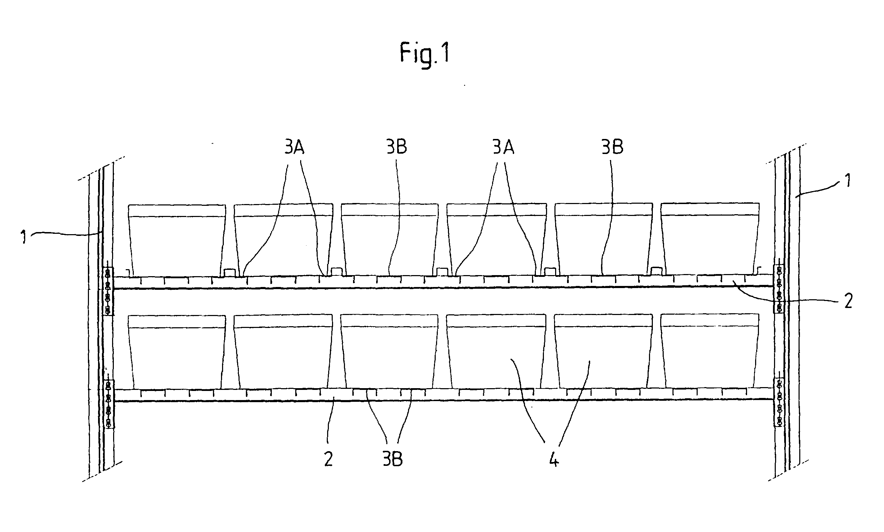

In Fig. 1 ist lediglich ein kleiner Ausschnitt aus einem ausgedehnten Regal für Lager- oder Kommissionierzwecke dargestellt. Derartige Regale können, abhängig von der jeweiligen Höhe des Faches, zwanzig oder mehr Stockwerke hoch sein. Die Grundstruktur des Regals besteht aus vertikalen Stützen 1 und horizontalen Traversen 2, welche die Stützen 1 miteinander verbinden und der Gesamtkonstruktion nach Art eines Fachwerks Stabilität verleihen. Die Traversen 2 sind vorzugsweise mit den Stützen 1 verschraubt. Auf den Traversen 2 liegen Warenauflagen 3 in Gestalt langgestreckter Profile auf. Beim Ausführungsbeispiel gemäß Fig. 1 ist die Länge der Traverse 2 derart bemessen, daß darauf Platz für insgesamt sechs parallel ausgerichtete Fächer ist. In den Fächern befinden sich, auf den Warenauflagen 3 aufliegend, die Waren. Diese Waren sind beim Ausführungsbeispiel Kunststoffbehälter 4, wie sie für Kommissionierzwecke weit verbreitet sind.

Fig. 1 läßt ferner erkennen, daß es sich bei den Warenauflagen 3 um Profile handelt, die sich in Richtung der Tiefe des Regals erstrecken, und deren Querschnittsgestalt unterschiedlich sein kann. In Fig. 1 sind in der oberen Reihe zwei unterschiedliche Typen Warenauflagen installiert. Ebene Warenauflagen 3B stützen die Kunststoffbehälter 4 in deren Mitte, während Warenauflagen 3A in Gestalt eines Sigma die seitliche Unterstützung sowie die seitliche Führung der Kunststoffbehälter 4 übernehmen. Demgegenüber stützen sich die Kunststoffbehälter 4 in der in Fig. 1 unten dargestellten Reihe ausschließlich auf Warenauflagen 3B des ebenen Typs ab. Hier fehlen also Überstände an den Warenauflagen, welche dazu geeignet wären, die Kunststoffbehälter 4 seitlich zu führen. Die weitere Erläuterung der Ausführungsbeispiele wird stets auf den Typ 3A der Warenauflage Bezug nehmen, jedoch gelten die Ausführungen selbstverständlich gleichermaßen für den Typ 3B.

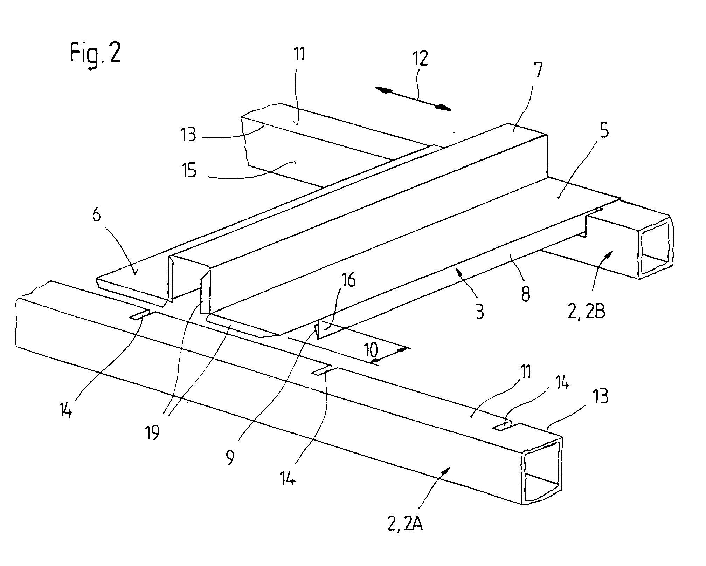

In Fig. 2 sind in perspektivischer Darstellung die vordere und hintere Traverse 2A bzw. 2B sowie eine Warenauflage 3 dargestellt. Die Warenauflage 3 besteht aus einem Profil, an dem Flächen 5, 6 für jeweils benachbarte, d. h. in unterschiedlichen Fächern angeordnete Kunststoffbehälter ausgebildet sind. Durch mehrfaches Abkanten des Profils während dessen Herstellung sind die beiden Flächen 5, 6 über eine Erhebung 7 miteinander verbunden. Die Erhebung 7 bildet beidseits die Führungsflächen für die eingelagerten und auf den Flächen 5, 6 aufliegenden Waren.

Die Länge der Warenauflage 3 kann je nach Anwendungszweck variieren. In der Regel werden auf den Warenauflagen bis zu zwei oder drei Kunststoffbehälter hintereinander, d. h. in Richtung der Tiefe des Regals, angeordnet.

Bei der Warenauflage 3 handelt es sich um ein durch mehrfaches Abkanten hergestelltes Blechprofil mit mehreren Abschnitten, die nachfolgend erläutert werden.

Als Stützfläche für die Waren dienen die Flächen 5, 6, zwischen denen sich die als beidseitige Führung dienende Erhebung 7 befindet. Entlang beider Längskanten der Warenauflage 3 ist diese mit um 90° abgeknickten, nach unten gerichteten Abschnitten 8 versehen, die daher die Längsränder der Warenauflage 3 bilden und die Warenauflage in bezug auf Biegung und Torsion versteifen. Die nach unten gerichteten Abschnitte 8 wiederum gehen über eine Abwinklung von nahezu 180° in als federnde Elemente dienende Endabschnitte 9 über. Die Endabschnitte 9, welche die Warenauflage 3 zusätzlich verstärken, sind schmaler gestaltet als die nach unten gerichteten Abschnitte 8.

Fig. 2 läßt ferner erkennen, daß sich die nach unten gerichteten Abschnitte 8 mit den Endabschnitten 9 nur über einen Teil der Länge der Flächen 5, 6 erstrecken. Jener Längsabschnitt 10 der Flächen 5, 6, entlang dessen der nach unten gerichtete Abschnitt 8 mit dem Endabschnitt 9 fehlt, liegt auf der Oberseite 11 der Traverse 2, 2A, 2B auf.

Eine erste Aufgabe des nach unten gerichteten Abschnittes 8 sowie des Endabschnittes 9 besteht, wie bereits dargelegt, in der Versteifung der Warenauflage 3. Die weitere Aufgabe dieser Teile besteht darin, die Warenauflage 3 an den Traversen 2 zu fixieren, so daß sich die Warenauflage 3 nicht in Traversenlängsrichtung 12 verschieben kann. Schließlich führen Abschnitt 8 und Endabschnitt 9 auch zu einer Fixierung der Warenauflage 3 in deren eigener Längsrichtung.

Zur Verwirklichung der genannten zweiten und dritten Teilaufgabe sind die Traversen 2, welche beim Ausführungsbeispiel als Vierkantrohre ausgebildet sind, an der den Warenauflagen 3 zugewandten Kante 13 mit Aussparungen in Gestalt von Schlitzen 14 versehen. Die Schlitze 14 erstrecken sich jeweils beidseits der Kante 13 von der Oberseite 11 der Traverse 2 bis zu deren der Warenauflage 3 zugewandten Seitenfläche 15. Hierbei ist die Erstreckung des Schlitzes 14 jeweils geringer als die Breite der Oberseite 11 bzw. die Höhe der Seitenfläche 15. Auf diese Weise wird eine nennenswerte Schwächung der Festigkeit der Traverse 2 durch die Schlitze 14 vermieden.

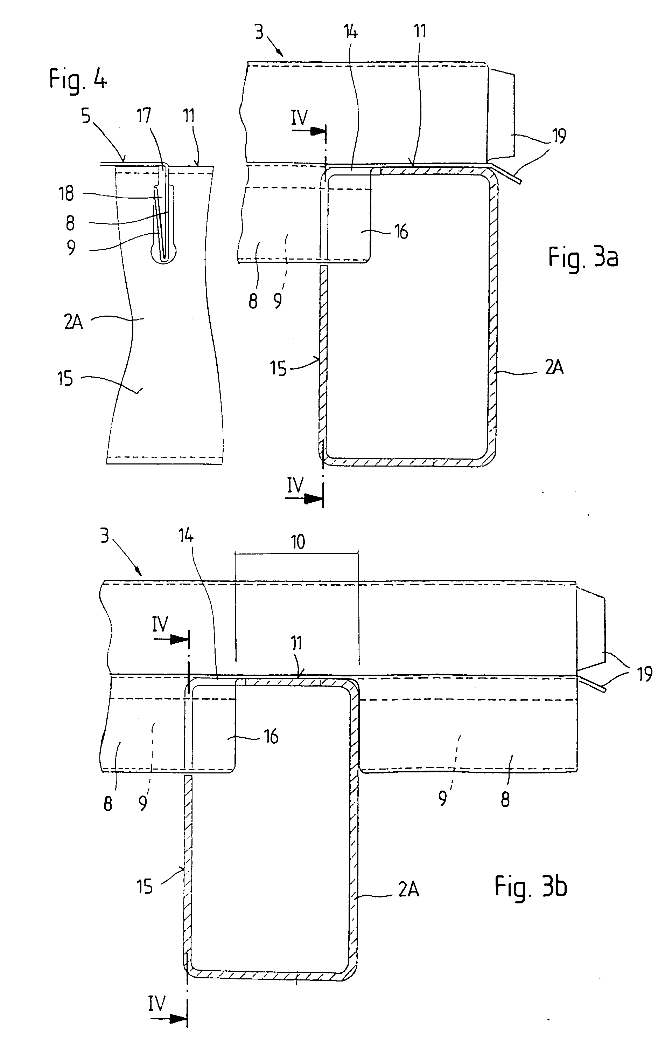

Die Schlitze 14 sind in jeder der beiden Traversen 2A, 2B in regelmäßigen Abständen angeordnet. Ferner liegen korrespondierende Schlitze in den beiden Traversen exakt einander gegenüber. Wird daher wie in den Figuren 2, 3a und 3b dargestellt, die Warenauflage 3 von oben her auf die Traversen gesetzt, gelangen die Endbereiche 16 der Abschnitte 8 sowie Endabschnitte 9 in die Schlitze 14. Der größte Abstand zweier korrespondierender Schlitze 14 zueinander ist daher geringfügig größer als die Länge der Abschnitte 8 und Endabschnitte 9 in Profillängsrichtung. Ferner ist die Breite jedes Schlitzes 14 so bemessen, daß der Abschnitt 8 und der daran um 180° abgewinkelte, federnde Endabschnitt 9 entgegen einem leichten Widerstand von oben her eingeführt werden können.

Die Endbereiche 16 dienen daher als Halteelemente der Warenauflage 3. Um deren Einrasten in dem Schlitz 14 zu gewährleisten, kann dieser wie in Fig. 4 dargestellt ausgebildet sein. Danach weist der in der Seitenfläche 15 angeordnete Bereich jedes Schlitzes 14 eine enge obere Schlitzöffnung 17 und eine daran nach unten hin anschließende, erweiterte Schlitzöffnung 18 auf. Die erweiterte Schlitzöffnung 18 ist geringfügig länger als die Höhe des Endabschnitts 9. Auf diese Weise kann der federnde Endabschnitt 9 der Warenauflage 3, wird dieser von oben her in die Traverse 2 eingesetzt, in der erweiterten Schlitzöffnung 18 einrasten. Gemäß Fig. 4 ist die Breite des Schlitzes 14 so bemessen, daß gegebenenfalls auch zugleich zwei benachbarte Warenauflagen 3 mit ihren Abschnitten 8 und federnden Endabschnitten 9 darin einrastbar sind.

Zur Erzielung einer glattflächigen Ablage für die Kunststoffbehälter reicht die Warenauflage 3 bei dem Ausführungsbeispiel nach Fig. 3a bis an die Vorderseite der Traverse 2A. Die Warenauflage 3 ist dort mit horizontalen und vertikalen Einführschrägen 19 versehen. Diese lassen sich in einfacher Weise herstellen, während das für die Warenauflage 3 verwendete, einstückige Stahlblech auf Länge geschnitten oder gestanzt wird. Zusätzliche Fertigungsschritte sind zur Herstellung der Auflaufschrägen 19 daher nicht erforderlich.

Bei der Variante gemäß Fig. 3b ist die Warenauflage 3 über die Vorderseite der Traverse 2A hinaus verlängert. Zur Erhöhung der Festigkeit in diesem Bereich sind Abschnitt 8 und Endabschnitt 9 der Warenauflage in diesem verlängerten Bereich erhalten.

## Patentansprüche

1. Regal für Lager- und Kommissionierzwecke mit vertikalen Stützen (1) und mit Traversen (2), welche die Stützen (1) horizontal verbinden und die vordere und hintere Abstützung von quer zu den Traversen (2) angeordneten und jeweils aus einem Profil bestehenden Warenauflagen (3) übernehmen, wodurch die Warenauflagen (3) in Richtung der Tiefe des Regals sich erstreckende Flächen (5, 6) für die darauf liegenden Waren (4) bilden, und ferner mit Mitteln zur Fixierung der Warenauflagen (3) in Traversenlängsrichtung (12), wobei die Mittel zur Fixierung der Warenauflagen (3) in Traversenlängsrichtung (12) Aussparungen (14) an den Traversen (2) und in die Aussparungen eingreifende Halteelemente (8, 9) an den Warenauflagen (3) sind,
**dadurch gekennzeichnet**,
daß die Halteelemente der Warenauflagen (3) durch die Endbereiche (16) nach unten gerichteten Abschnitte (8) der Warenauflagen (3) gebildet werden, wobei sich die nach unten gerichtete Abschnitte (8) nur über einen Teil der Gesamtlänge der Warenauflagen (3) erstrecken und jene Längsabschnitte (10) der Warenauflagen, entlang derer die nach unten gerichteten Abschnitte (8) fehlen, flächig auf der Oberseite der Traverse aufliegen.

2. Regal nach Anspruch 1, dadurch gekennzeichnet, daß die Aussparungen (14) als quer zur Traversenlängsrichtung (12) angeordnete Schlitze gestaltet sind.

3. Regal nach Anspruch 2, dadurch gekennzeichnet, daß die Schlitze (14) zugleich nach oben und zur Seite in Richtung auf die Warenauflage (3) hin offen sind.

4. Regal nach Anspruch 3, dadurch gekennzeichnet, daß sich die Schlitze (14) über Eck von der Oberseite (11) der Traverse (2) bis zu deren der Warenauflage (3) zugewandten Seitenfläche (15) erstrecken, wobei die Erstreckung jeweils geringer als die Breite der Oberseite (11) bzw. die Höhe der Seitenfläche (15) ist.

5. Regal nach Anspruch 3 oder Anspruch 4, dadurch gekennzeichnet, daß der zur Seite in Richtung auf die Warenauflage (3) hin offene Bereich der Schlitze (14) eine enge obere Schlitzöffnung (17) und eine daran nach unten hin anschließende, erweiterte Schlitzöffnung (18) aufweist, und daß die Halteelemente der Warenauflagen (3) mit federnden Elementen versehen sind, die in der erweiterten Schlitzöffnung (18) einrastbar sind.

6. Regal nach einem der vorangehenden Ansprüche, dadurch gekennzeichnet, daß die nach unten gerichteten Abschnitte (8) der Halteelemente über eine Abwicklung von nahezu 180° in als federnde Elemente dienende Endabschnitte (9) übergehen.

7. Regal nach einem der vorangehenden Ansprüche, dadurch gekennzeichnet, daß die nach unten gerichteten Abschnitte (8) zugleich die Längsränder der Warenauflage (3) sind und die Warenauflage (3) in bezug auf Biegung und Torsion versteifen.

8. Regal nach einem der vorangehenden Ansprüche, dadurch gekennzeichnet, daß die Warenauflage (3) an zumindest ihrer einen Stirnseite mit einstückig angeformten Einführschrägen (19) versehen ist.

## Claims

1. Rack for storage and order-picking purposes, having vertical supports (1) and having crossmembers (2) which connect the supports (1) horizontally and assume the task of supporting, at the front and rear, shelves (3) which are arranged transversely to the crossmembers (2) and each comprise a profile, as a result of which the shelves (3) form, for the goods (4) located thereon, surfaces (5, 6) extending in the direction of the depth of the rack, and also having means for fixing the shelves (3) in the longitudinal direction (12) of the crossmembers, the means for fixing the shelves (3) in the longitudinal direction (12) of the crossmembers being cutouts (14) on the crossmembers (2) and retaining elements (8, 9) which are located on the shelves (3) and engage in the cutouts, characterized in that the retaining elements of the shelves (3) are formed by the end regions (16) of downwardly directed portions (8) of the shelves (3), the downwardly directed portions (8) only extending over part of the overall length of the shelves (3), and those longitudinal portions (10) of the shelves along which there are no downwardly directed portions (8) resting flat on the top side of the crossmember.

2. Rack according to Claim 1, characterized in that the cutouts (14) are configured as slots arranged transversely to the longitudinal direction (12) of the crossmembers.

3. Rack according to Claim 2, characterized in that the slots (14) are open both in the upward direction and to the side in the direction of the shelf (3).

4. Rack according to Claim 3, characterized in that the slots (14) extend around the corner from the top side (11) of the crossmember (2) to the side surface (15) of the latter facing the shelf (3), the extent in each case being smaller than the width of the top side (11) and the height of the side surface (15).

5. Rack according to Claim 3 or Claim 4, characterized in that that region of the slots (14) which is open to the side in the direction of the shelf (3) has a narrow top slot opening (17) and a widened slot opening (18) adjoining the same in the downward direction, and in that the retaining elements of the shelves (3) are provided with resilient elements which can be latched in the widened slot opening (18).

6. Rack according to one of the preceding claims, characterized in that the downwardly directed portions (8) of the retaining elements merge, via an angled section of virtually 180°, into end portions (9) serving as resilient elements.

7. Rack according to one of the preceding claims, characterized in that the downwardly directed portions (8) are, at the same time, the longitudinal borders of the shelf (3) and stiffen the shelf (3) in relation to bending and torsion.

8. Rack according to one of the preceding claims, characterized in that, on at least one end side, the shelf (3) is provided with integrally formed introduction slopes (19).

## Revendications

1. Rayonnage de stockage et de préparation de commandes, comportant des montants verticaux (1) et des traverses (2) qui relient les montants (1) horizontalement, et qui assurent le support avant et arrière de supports de marchandises (3) respectivement constitués d'un profilé disposés transversalement par rapport aux traverses (2), moyen par lequel les supports (3) forment pour les marchandises (4) qui y sont déposées des surfaces (5, 6) s'étendant en direction de la profondeur du rayonnage, et comportant en outre des moyens destinés à la fixation des supports de marchandises (3) dans la direction longitudinale (12) des traverses, les moyens destinés à la fixation des supports de marchandises (3) dans la direction longitudinale (12) des traverses étant des évidements (14) pratiqués dans les traverses (2), et des éléments de retenue (8, 9) des supports de marchandises (3) qui s'engagent dans les évidements,
caractérisé en ce que
les éléments de retenue des supports de marchandises (3) sont formés par les zones d'extrémité (16) de tronçons (8) orientés vers le bas des supports de marchandises (3), les tronçons (8) orientés vers le bas ne s'étendant que sur une partie de la longueur totale des supports de marchandises (3), et les tronçons longitudinaux (10) des supports de marchandises, le long desquels les tronçons (8) orientés vers le bas font défaut, prenant appui par toute leur surface sur la face supérieure de la traverse.

2. Rayonnage selon la revendication 1, caractérisé en ce que les évidements (14) sont réalisés sous la forme de fentes disposées transversalement à la direction longitudinale (12) des traverses.

3. Rayonnage selon la revendication 2, caractérisé en ce que les fentes (14) sont ouvertes aussi bien vers le haut que vers le côté en direction du support de marchandises (3).

4. Rayonnage selon la revendication 3, caractérisé en ce que les fentes (14) s'étendent en angle à partir de la face supérieure (11) de la traverse (2) jusqu'à sa surface latérale (15) orientée vers le support de marchandises (3), l'extension étant inférieure à la largeur de la face supérieure (11) ou à la hauteur de la surface latérale (15).

5. Rayonnage selon la revendication 3 ou la revendication 4, caractérisé en ce que la zone des fentes (14) ouverte vers le côté en direction du support de marchandises (3) comporte une ouverture supérieure de fente étroite (17), et une ouverture de fente agrandie (18) s'y raccordant vers le bas, et en ce que les éléments de retenue des supports de marchandises (3) sont munis d'éléments élastiques pouvant être encliquetés dans l'ouverture de fente agrandie (18).

6. Rayonnage selon l'une quelconque des revendications précédentes, caractérisé en ce que les tronçons (8) orientés vers le bas des éléments de retenue se transforment suivant un angle de l'ordre de 180° en tronçons d'extrémité (9) servant d'éléments élastiques.

7. Rayonnage selon l'une quelconque des revendications précédentes, caractérisé en ce que les tronçons (8) orientés vers le bas sont simultanément les bords longitudinaux du support de marchandises (3), et renforcent le support de marchandises (3) en flexion et en torsion.

8. Rayonnage selon l'une quelconque des revendications précédentes, caractérisé en ce que le support de marchandises (3) est muni, au moins sur sa face frontale, de biseaux d'insertion (19) formés d'un seul tenant.
